# EUROPEAN PATENT SPECIFICATION

(11) **EP 3 769 614 B1**
(45) Date of publication and mention of the grant of the patent: **04.09.2024**
(21) Application number: 19187646.5
(22) Date of filing: 22.07.2019
(51) Int. Cl.: A01M 7/00, A01G 23/00

(54) **ATTACHMENT FOR A FORESTRY VEHICLE**
AUFSATZ FÜR EINE FORSTWIRTSCHAFTSMASCHINE
DISPOSITIF ATTACHÉ À UN VÉHICULE FORESTIER

(43) Date of publication of application: 27.01.2021
(73) Proprietor: Kinsky, Constantin Norbert, 59102 Zdar nad Sazavou (CZ); Nemec, Tomas, 59212 Nizkov (CZ); Nemec, Ivo, 59212 Nizkov (CZ); Havelka, Petr, 59101 Zdar nad Sazavou (CZ)
(72) Inventor: Kinsky, Constantin Norbert, 59102 Zdar nad Sazavou (CZ); Nemec, Tomas, 59212 Nizkov (CZ); Nemec, Ivo, 59212 Nizkov (CZ); Havelka, Petr, 59101 Zdar nad Sazavou (CZ)
(74) Representative: Hartvichova, Katerina

(56) References cited:
- WO-A1-92/03908
- AT-B- 389 486
- CA-A- 981 015
- CN-A- 106 342 779
- CN-A- 108 849 829

## Description

### Field of Art

The present invention relates to the field of protection of forests against pests, in particular against bark beetle. In particular, the invention relates to an attachment, a forestry vehicle and a method for such protection.

### Background Art

At present, a major problem in forestry throughout Europe is the increased incidence of bark beetle - in particular, spruce bark beetle - in forests, which causes considerable damage to forestry. Bark beetle-infected trees need to be processed as soon as possible; and timely and effective decontamination of the infected wood is one of the most important activities. The methods of decontamination can be divided into manual, i.e. mechanical decontamination which mainly consists in debarking using a scraper or debarking by means of an adapter - a milling cutter - for a chainsaw. For machine debarking, a harvester with a debarking head is used or debarking is performed only in the wood storage. A specific problem is the protection of the wood stored in the forest. The following methods are currently available: classical spraying treatment of the debarked wood, covering of the wood with a foil, or covering of the wood with insecticidal nets.

The mechanical decontamination by manual debarking with a scraper is highly effective, achieving virtually 100% efficiency. But it is very laborious. The complete surface of the tree trunks must be debarked, hence it is necessary to turn them around during debarking. This method is not applicable if pupae already begin to appear under the bark. Even the previously recommended methods - raking the scraped bark and subsequently burning it, performing the debarking on a foil, have virtually no effect in such situation.

Manual debarking with a chainsaw cutter is more effective than manual debarking with a scraper. The use of a harvester with a debarking head is most effective.

Another option is transport of the wood to a warehouse and subsequent processing, which may also include debarking. This method has its risks, for example, when the wood is transported in a stage of an almost adult bark beetle that can attack forests along the transport route.

The removal of infected wood (timber) without decontamination is inadmissible. Chemical decontamination consists mainly in manual spraying using various types of manual spraying devices. Such methods are slow, and represent a significant health risk for the spraying machines operators and can also have the result that more pesticide is spread on the treated wood or its surroundings, thus releasing more pesticide in nature than is actually required or desired. To be truly effective, the spraying must be done in time, at the latest at the pupae stage. If the decontamination is performed just before the bark beetles leave the wood, its effect is very fast, almost instantaneous. With increasing time between treatment and this last stage of development of the beetle, the rate of action slows.

Decontamination of stored wood is a very specific problem at present. Each tree trunk should be individually treated prior to storing, and after a period of time the treatment should be repeated or the wood should be removed from the forest. However, the current technologies do not treat each tree trunk individually, they usually involve spraying or covering of a whole pile of logs.

Another option is to protect the stored wood with an airtight foil. The wood is stacked on the foil, then it is covered by the foil (two layers of the foil are recommended) and the joints must be welded. Oxygen under the sail is consumed in a short time and replaced by carbon dioxide, which not only preserves the wood, but also causes the beetles to die, because they have nothing to breathe. This method has been used to protect wood from fire without any deterioration in wood quality even after several years of storage, but in principle it can also be used as a decontamination method. The disadvantage is that even minor damage to the foil can lead to introduction of oxygen under the sail and the protection ceases to function.

Thus, the methods available currently for protection of forests against bark beetle, especially for protection against bark beetle in forests where felled wood is stored, have a low reliability or represent health hazards for the workers.

Moreover the above describes techniques and methods of treatment signficantly increase the cost of wood processing, which is particularly harmful at a time when wood prices are severely depressed because of the beetle contamination, and when forestry managers need to dedidate as much financial resources as possible to the reconstruction of damaged forests.

Documents CA 981015, AT 389486 and WO 92/03908 disclose devices for processing felled trees, based on forestry vehicles.

### Disclosure of the invention

In order to solve the above mentioned problems, the present invention provides an attachment for a forestry vehicle according to claim 1 which is useful for pesticidal treatment of wood of cut trees, as well as a forestry vehicle according to claim 2.

In a first aspect of the invention, the attachment for a forestry vehicle comprises at least two nozzles, wherein each nozzle is provided with means for fixing the nozzle to a head of the forestry vehicle, and each nozzle is provided with a protective housing. The attachment further comprises at least one main tank for holding a liquid, a tubing connecting the main tank with the said nozzles, and a means for propelling the liquid from the tank to the nozzles and out of the nozzles.

The attachment further includes a head which is equipped with means for moving the tree trunk along its longitudinal axis. The attachment is suitable for being attached to any forestry vehicle (preferably heavy forestry vehicle) to which the head can be mounted. The head contains diameter sensors to measure the diameter of the tree trunk and the attachment is configured to adapt the number of active nozzles in response to the signal from the diameter sensors.

Thus, the attachment comprises a head attachable to a movable arm of a forestry vehicle, said head having means for gripping the three trunk and moving the tree trunk along its longitudinal axis, and said head being provided with at least two nozzles, wherein the nozzles are configured to cover the whole circumference or the whole surface of the tree trunk by a liquid sprayed through the nozzles. Each nozzle is provided with a protective housing. The attachment further comprises at least one main tank for holding a liquid, a tubing connecting the main tank with the said nozzles, and a means for propelling the liquid from the tank to the nozzles and out of the nozzles.

In a second aspect of the invention, a forestry vehicle is provided, said forestry vehicle comprising a head attached to a movable arm of the forestry vehicle, said head having means for gripping the three trunk and moving the tree trunk along its longitudinal axis, and said head being provided with at least two nozzles, wherein the nozzles are configured to cover the whole circumference or the whole surface of the tree trunk by a liquid sprayed through the nozzles. Each nozzle is provided with a protective housing. The forestry vehicle further comprises at least one main tank for holding a liquid, preferably disposed on the frame of the forestry vehicle, a tubing connecting the main tank with the said nozzles, and a means for propelling the liquid from the tank to the nozzles and out of the nozzles. The head contains diameter sensors to measure the diameter of the tree trunk and the forestry vehicle is configured to adapt the number of active nozzles in response to the signal from the diameter sensors.

The forestry vehicle may be a harvester, a forestry machine, a forestry tractor, or any other machine used for felling and/or bucking and/or manupulating tree trunks. Most typically, the forestry vehicle is a harvester.

In this text, the term "harvester" or "forestry harvester" is intended to mean a type of heavy forestry vehicle for cut-to-length logging operations for felling, delimbing and bucking trees.

The nozzles are configured to cover the whole circumference or the whole surface of the tree trunk by a liquid sprayed through the nozzles. In a preferred embodiment, the nozzles are fixed to the head and distributed in regular intervals around an opening formed by the gripping and moving means.

The at least two nozzles are thus preferably disposed or configured to be disposed in regular distances along the circumference of the opening through which the tree trunk moves when the apparatus of the invention is in use. The opening is typically formed by the gripping and moving means. The nozzles are disposed so that they allow a regular and complete spraying of the tree trunk around its circumference.

"Regular distances" or "regular intervals" are intended to mean distances between neighbouring (adjacent) nozzles which are substantially equal. By "substantially equal" it is understood that that the distances between neighbouring nozzles differ by no more than 20 %, preferably by no more than 10 %, more preferably by no more than 5 %.

The number of nozzles may vary. For example, two nozzles, three nozzles, four nozzles, five nozzles, six nozzles, seven nozzles, eight nozzles, nine nozzles, ten nozzles may be provided. Even numbers of nozzles are preferred.

For thinner tree trunks, two nozzles may suffice; for thicker tree trunks, three, four, five, six, or more nozzles may be provided.

The nozzles may typically be disposed on jaws of delimbing means, on the frame of the means for gripping and moving the tree trunk, or on separate jaws or holder(s) which are attached to the head and arranged so that the nozzles are disposed in regular distances around the circumference of the opening through which the tree trunk moves when the head is in use.

The nozzles may in some embodiments be arranged substantially circularly around the opening through which the tree trunk moves when the head is in use. The nozzles are arranged in regular distances so that they can reliably cover the whole circumference of the tree trunk by the sprayed liquid.

The nozzles preferably have a spraying angle within the range from 20 to 80 degrees, more preferably from 30 to 60 degrees. The setup of the nozzles within the said spraying angle ensures that all or almost all the sprayed liquid is applied on the tree trunk. Generally, the closer to the moving tree trunk the nozzles are disposed, the wider spraying angle is needed, and vice versa - the farther from the moving tree trunk the nozzles are disposed, the narrower spraying angle is sufficient. This results in significant savings of the spraying liquid which translate into a higher economic effectiveness, and it prevents undesirable splashing of the insecticide contained in the spraying liquid to the surrounding environment where it could kill non-target insects.

The fixing means may be any means suitable for fixing the nozzles to the head or to a component of the head. In particular, the fixing means may be screws, anchors, brackets, clamps, welds, It is particularly advantageous when the nozzles are disposed within recesses or cavities provided on/within the component of the head to which the nozzles are fixed (e.g., delimbing jaws, frame of the gripping and moving means, drive rollers, drive roller housings). When the head is in use and delimbing the tree, the nozzles risk being damaged by the branches and other pieces of wood flying around. Their disposal within recesses increases the protection of the nozzles and decreases the risk of their damage. Recesses and cavities are considered in this text as a type of protective housing, i.e., the term "protective housing" also includes recesses and cavities, and disposal of the nozzles within recesses and cavities.

Each nozzle is provided with a protective housing which may have any suitable form, such as, for example, the form of a recess, a cavity or a structure protruding outside and encompassing the nozzle and leaving just an opening for spraying the liquid. As described above, the nozzles are at a rather big risk of being damaged by branches or other pieces of wood flying from the delimbing jaws of the head, The protective housing provides the minimum necessary protection for the nozzles, and optionally to other components such as control valves, tubing, etc. The protective housing is typically metallic, and encloses the nozzle so that it does not prevent its spraying in the direction of the tree trunk being moved through the opening. The protective housing may in some embodiments be closable and openable. It may be opened when the spraying function is required, and it may be closed when the spraying function is not required, thus reliably protecting the nozzles. The closing and opening of the protective housing may be, for example, manually controllable, or electrically controllable.

The nozzles may be individually controllable. The supply of liquid to the nozzles may be controlled individually, e.g, by providing a control valve separately for each nozzle, or by providing a first control valve circuit for one half of the nozzles and a second control valve circuit for the other half of the nozzles, wherein the nozzles controlled by the first control valve circuit and the nozzles controlled by the second control valve circuit alternate. The control valves may be controlled by a liquid supply control unit which may be part of the control unit of the vehicle or it may be a separate unit. The amount of active nozzles may be adapted to the size of the treated wood piece. For example, the head may be provided with four nozzles which are all used for spraying thick tree trunks, but for thin tree trunks only every second nozzle is used, i.e., two nozzles. In another example, the head may be provided with six nozzles which are all used for spraying thick tree trunks, but for thin tree trunks only every second nozzle is used, i.e., three nozzles. This allows significant savings of the liquid used for spraying.

The nozzles may be provided with at least one non-return (one-way) valves. When the control valve closes, the non-return valve closes the nozzle and thus the liquid remains in the tubing and does not flow out of the nozzle. It is advantageous that the non-return valve(s) is/are as close to the nozzles as possible, because this decreases the amount of the liquid that flows out of the nozzle after the control valve is closed. The non-return valve(s) avoid unnecessary spilling of the spraying liquid.

In some embodiments, the nozzles may be attached movably on the head. Movable attachment of the nozzles allows for adjusting the nozzles to various lengths of the elongated wood pieces treated by the device of the invention. Movable attachment also allows the use of nozzles with a narrow spraying angle (e.g., up to 60 or up to 40 degrees), thus limiting the amount of the pesticidal liquid sprayed into the surrounding environment and limiting the damage to other insect species caused by this pesticidal liquid.

The movement of the nozzles may be performed using electromotors attached to the nozzles, for example, each nozzle may be provided with its electromotor, or two or three or more nozzles may be attached to one electromotor. The electromotors may be controlled by a nozzle movement control unit, for example based on the wood piece dimension data entered manually or electronically, or based on information available from sensors which may optionally be disposed on the head for measuring the wood piece dimensions.

The head contains means for moving the tree trunk. Such means typically are or contain at least two feed rollers. The feed rollers grasp the tree by being pressed against the tree trunk and move it by the rotational movement of the feed roller wheels.

The head typically contains a delimbing means which are used to cut branches off the tree trunk as it moves by the action of the gripping and moving means. The delimbing means typically contain or are jaws, and the jaws have at least one sharp edge, i.e., they serve as knives in the delimbing stage.

A typical head of a forestry harvester contains two feed rollers to grip and move the tree trunk through the head along its longitudinal axis (the feed rollers are an example of gripping and moving means), two or more curved delimbing knives for removing branches (an example of delimbing means), a chain saw to cut the tree at its base in the felling stage, and cut the trunk to length in the bucking stage. It may further contain diameter sensors to measure the diameter of the tree trunk, and a measuring wheel which measures the length of the step as it is fed through the head. The diameter sensors and the measuring wheel cooperate in known harvesters to calculate the volume of timber harvested.

The signal from the diameter sensors may be used in the present invention as an input information for controlling the number of active nozzles. Typically, this may be done by employing a simple algorithm which switches on the liquid supply only to every second nozzle (or only to the first control valve circuit or only to the second control valve circuit) when the trunk diameter is lower than (or equal to) a pre-determined threshold value, or switches on the liquid supply to all nozzles (or to both control valve circuits) when the trunk diameter is higher than (or equal to) a pre-determined threshold value.

The main tank has to have a large volume, corresponding to the spraying liquid to be consumed within, for example, one day. This may correspond to 100 to 1000 liters, preferably 250 to 700 liters, or 250 to 500 liters, for example. It may be possible to suspend such large main tank from the vehicle frame, or to fix it to the vehicle frame; depending on the possible load of the vehicle frame. In some embodiments, a plurality of main tanks may be provided, wherein each main tank may be smaller, and their total volume may correspond to the herein mentioned volumes.

The spraying liquid (also called "liquid", "pesticidal liquid" in this disclosure) is a pesticide solution, dispersion or suspension. The choice of the pesticide depends on the target pest. When the target pest is an insect, the pesticide is an insecticide effective against the target insect species.

The present invention helps to reduce the amount of the spraying liquid needed for spraying. The automated, thorough, easily controllable and targeted spraying of only the tree trunk, and only when the tree is moved through the delimbing head, results in a more effective use of the spraying liquid and in virtually no spraying liquid misapplied to the surrounding environment, thus reducing the amount of the used spraying liquid.

The means for propelling the liquid may include a pump or a compressor, or any other suitable liquid-propelling means. The pump or the compressor or other liquid-propelling means may be driven electrically or hydraulically, or may be driven using the energy provided by the forestry machine engine. The embodiments containing a pump or a compressor are described herein as particular examples.

In some embodiments, the means for propelling the liquid may contain a pump connected to the main tank and a working tank connected with the pump, said working tank being equipped with at least one control valve for controlling the amount of liquid propelled through the nozzles. The presence of the control valve(s) allows to control and adjust the dosing of the liquid.

In some embodiments, the means for propelling the liquid may contain a working tank connected to the main tank for holding the liquid, preferably via a check valve, said working tank being connected via a valve to an airtank connected to a compressor, and said working tank being equipped with at least one control valve for controlling the amount of liquid propelled through the nozzles. The presence of the control valve(s) allows to control and adjust the dosing of the liquid.

The working tank is an auxiliary tank from which the liquid is propelled directly to the nozzles, wherein the amount of the liquid may be controlled by one or more control valves. The working tank is typically suspended from or fixed to the vehicle frame. The working tank contains the liquid under pressure, to be propelled under pressure to the nozzles. Typically, the working tank is provided with a valve for setting a pre-determined constant output pressure of the liquid outputted from the working tank, and the control valve(s) are typically disposed in the tubing between the said valve and the nozzles. The valve for setting a pre-determined constant output pressure ensures a constant pressure of the liquid which is further propelled to the nozzles as controlled by the control valves; thus ensuring a constant dosage of the liquid. This in turn further reduces the consumption of the spraying liquid.

The tubing may include tubes, e.g. flexible tubes, or pipes. The tubing must be liquidimpermeable, and it is preferably made of an inert material (e.g. plastics, rubber, non-corrosive metals such as steel). The tubing should be made of a durable and mechanically resistant material, i.e., preferably metals, or reinforced plastics or reinforced rubber, or should be protected against mechanical stresses and delimbed pieces of wood, e.g., by a housing.

The attachment and the forestry vehicle according to the present invention are particularly useful for protecting wood against pests, in particular against bark beetle, and/or for killing pests (in particular bark bettle) present on the tree trunks.

Furthermore, the present invention provides a method for protecting forests against pests, in particular against bark beetle, which comprises the steps of
a) felling an infected tree, and
b) spraying the infected tree trunk and branches simultaneously with delimbing the wood using the forestry vehicle or the forestry vehicle attachment of the present invention, optionally together with removing bark from the wood;
c) optionally repeatedly moving the tree trunks, or the logs produced by bucking the tree trunks, through the head of the forestry vehicle and spraying the tree trunk or the logs in regular intervals of time, in particular in the intervals within the range of 2 to 8 weeks.
Using this method, the trees surrounding the place where the wood is stored are protected from further spreading of the pest from the felled infected trees.

"Harvesting of wood" or "harvesting of trees" includes any or all of the steps of cutting the tree, delimbing the tree, bucking the tree, storing the logs

### Brief Description of Drawings

Figure 1 schematically shows a forestry vehicle, more particularly a harvester, with an attachment as described in an exemplary embodiment.
Figure 2 shows a detail of an arrangement of six nozzles on the head of the attachment (an alternative to the exemplary embodiment).
Figure 3 schematically shows a detail of one embodiment of the means for propelling liquid, using a pump.
Figure 4 schematically shows a detail of another embodiment of the means for propelling liquid, using a compressor.

### Example of carrying out the Invention

The invention is further explained using a particular embodiment of the invention, as shown in the figures. The example and the figures shall not be construed as limiting the scope of the invention which is exclusively determined by the claims.

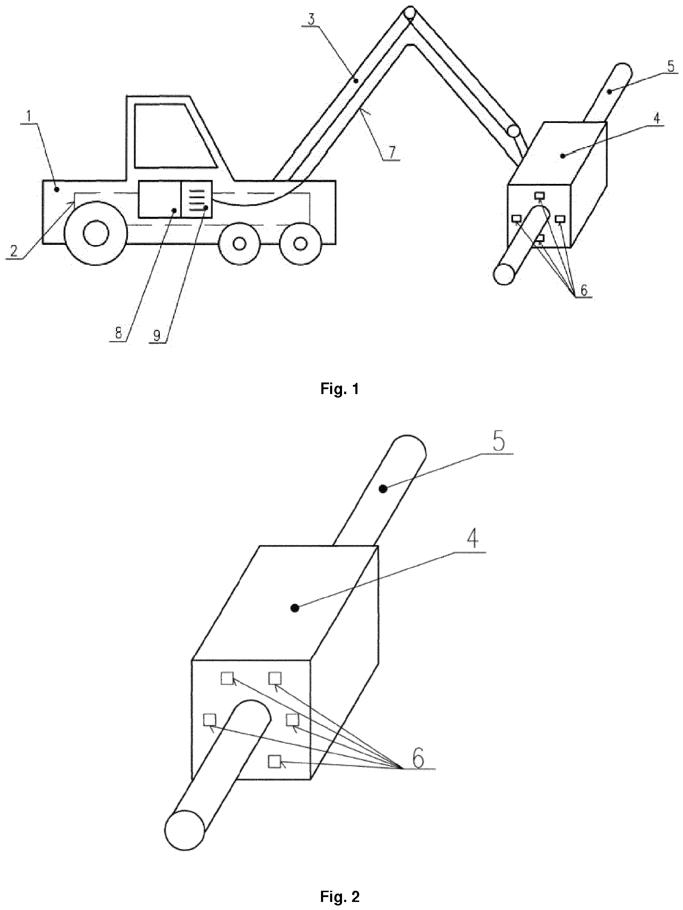

In the particular embodiment of the invention, Figure 1 shows a forestry vehicle 1 with an attachment according to the invention. The vehicle comprises a head 4 disposed on a movable arm 3. The head is represented very schematically, without any specific depiction of the gripping and moving means or the delimbing means. The arrangement of such gripping and moving means and delimbing means within the head is well known to a person skilled in the art. The head 1 is provided with four nozzles 2 arranged in regular distances around the opening of the head which is normally formed by the arrangement of the gripping and moving means. The opening of the head can receive a tree trunk 5. The nozzles 6 are directed so as to cover the whole surface of the tree trunk 5 by sprayed liquid. The tank 8 for holding liquid (also called herein "main tank") is suspended on the frame 2 of the forestry vehicle 1. The main tank 8 is connected with the nozzles 2 by a tubing 7.

Figure 2 shows an embodiment with six nozzles arranged regularly around the opening of the head.

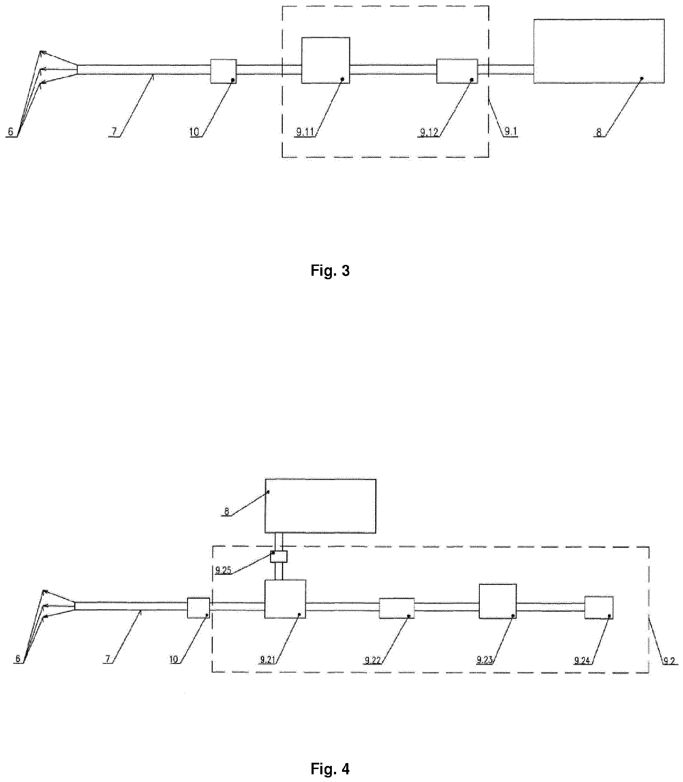

Means 9 for propelling liquid is mounted on the frame 2. The means 9 for propelling liquid may be constructed in various ways, two exemplary embodiments are shown in Figures 3 and 4.

Figure 3 shows a scheme of one embodiment of the means 9.1 for propelling liquid, which contains a working tank 9.11 provided with a valve for setting the output pressure (not shown) and a pump 9.12 connected to the main tank 8. Another control valve 10 controls the amount of the liquid supplied to the nozzles 6.

Figure 4 shows a scheme of another embodiment of the means 9.2 for propelling liquid, which contains a working tank 9.21 connected to the main tank 8 via a check valve 9.25, and the working tank 9.21 is connected with an air tank 9.23 via a valve 9.22, and the air tank 9.23 is in turn connected with a compressor 9.24. The valve 9.22 ensures the correct filling of the working tank 9.21, which is then connected with the control valve 10 for controlling the amount of the liquid supplied to the nozzles 6.

The forestry vehicle 1 is preferably a harvester.

The treatment of a tree trunk using the herein described device proceeds as follows. The tree trunk 5 is gripped by the head 4. Then pesticidal liquid from the main tank 8 is propelled by the liquid propelling means 9 to nozzles 2 via the tubing 7 and via at least one control valve 10. In some embodiments, the supply of liquid to the nozzles 6 is controlled individually for each nozzle, or by two control valve circuits, each for one half of the nozzles, wherein the nozzles controlled by each circuit are alternating. In these embodiments, all four or only two nozzles 6 can be used, thus adapting to the thickness of the sprayed tree trunk.

The amount of the supplied liquid, or dosing of the liquid, respectively, is ensured by adjusting the pressure across the entire liquid propelling means 9.1 or 9.2. In the pump spray circuit 9.1 the pressure is provided by the pump 9.12. The pressure differences are compensated in the working tank 9.11 with the control valve located between the nozzles 6 and the main tank 8. The pressure level is set by a valve for setting the output pressure (not shown) provided on the working tank 9.11. The application of the liquid is triggered by the control valve 10, which is controlled depending on the movement of the stem 5 in the head 1 and the diameter of the stem 5 in controlling the number of active nozzles 6. In the circuit of the sprayer 9.2, the pressure is provided by the compressor 9.24 and the air tank 9.23. Refilling of the working tank 9.21 is controlled by the valve 9.22 and the non-return valve 9.25.

## Claims

1. An attachment for a forestry vehicle for felling and/or bucking and/or manipulating tree trunks, wherein the said attachment comprises at least two nozzles (6) and a head (4) attachable to a movable arm (3) of a forestry vehicle (1),
wherein each nozzle (6) is provided with means fixing the nozzle (6) to the head (5), and each nozzle (6) is provided with a protective housing, wherein the attachment further comprises at least one main tank (8) for holding a liquid, a tubing (7) connecting the main tank (8) with the said nozzles (6), and a means (9) for propelling the liquid from the tank (8) to the nozzles (6) and out of the nozzles (6),
wherein the head (4) has means for gripping a tree trunk and moving the tree trunk (5) along its longitudinal axis,
wherein the nozzles (6) are configured to cover the whole surface of the tree trunk (5) by a liquid sprayed through the nozzles (6),
**characterized in that** the head (4) contains diameter sensors to measure the diameter of the tree trunk (5) and the attachment is configured to adapt the number of active nozzles in response to the signal from the diameter sensors.

2. A forestry vehicle (1) for felling and/or bucking and/or manipulating tree trunks, which comprises a head (4) attached to a movable arm (3), said head (4) having means for gripping the tree trunk (5) and moving the tree trunk (5) along its longitudinal axis, and said head (4) being provided with at least two nozzles (6) fixed to the head (4), wherein the nozzles (6) are configured to cover the whole surface of the tree trunk (5) by a liquid sprayed through the nozzles (6), wherein each nozzle (6) is provided with a protective housing, and wherein the forestry vehicle (1) further comprises at least one main tank (8) for holding a liquid, preferably disposed on the frame (2) of the forestry vehicle (1), a tubing (7) connecting the main tank (8) with the said nozzles (6), and a means (9) for propelling the liquid from the tank (8) to the nozzles (6) and out of the nozzles (6), **characterized in that** the head (4) contains diameter sensors to measure the diameter of the tree trunk (5) and the forestry vehicle (1) is configured to adapt the number of active nozzles in response to the signal from the diameter sensors.

3. The attachment according to claim 1, or the forestry vehicle according to claim 2, wherein the number of nozzles (6) is two, four, six, eight or ten.

4. The attachment according to claim 1 or 3, or the forestry vehicle according to claim 2 or 3, wherein the spraying angle of the nozzles (6) is within the range from 20 to 80 degrees, preferably within the range from 30 to 60 degrees.

5. The attachment according to any of claims 1, 3-4, or the forestry vehicle according to any of claims 2-4, wherein the nozzles (6) are fixed to the head (4) and distributed in regular intervals around an opening formed by the gripping and moving means.

6. The attachment according to any of claims 1, 3-5, or the forestry vehicle according to any of claims 2-5, wherein the nozzles (6) are provided with at least one non-return valve.

7. The attachment according to any of claims 1, 3-6, or the forestry vehicle according to any of claims 2-6, wherein the nozzles (6) are disposed within recesses or cavities provided on or within a component of the head.

8. The attachment according to any of claims 1, 3-7, or the forestry vehicle according to any of claims 2-7, wherein the protective housing is closable and openable, preferably the closing and opening of the protective housing is manually controllable or electrically controllable.

9. The attachment according to any of claims 1, 3-8, or the forestry vehicle according to any of claims 2-8, wherein a control valve is provided separately for each nozzle, or a first control valve circuit is provided for one half of the nozzles and a second control valve circuit is provided for the other half of the nozzles.

10. The attachment according to any of claims 1, 3-9, or the forestry vehicle according to any of claims 2-9, wherein the nozzles (6) are mounted movably on the head (4).

11. The attachment according to any of claims 1, 3-10, or the forestry vehicle according to any of claims 2-10, wherein the means (9) for propelling the liquid contain a pump (9.12) connected to the main tank (8) and a working tank (9.11) connected with the pump (9.12), said working tank (9.11) being equipped with at least one control valve (10) for controlling the amount of liquid propelled through the nozzles (6).

12. The attachment according to any of claims 1, 3-10, or the forestry vehicle according to any of claims 2-10, wherein the means (9) for propelling the liquid contain a working tank (9.21) connected to the tank (8) for holding the liquid, preferably via a check valve (9.25), said working tank (9.21) being connected via a valve (9.22) to an airtank (9.23) connected to a compressor (9.24), and said working tank (9.21) being equipped with at least one control valve (10) for controlling the amount of liquid propelled through the nozzles (6).

13. A method for protecting forests against pests, in particular against bark beetle, which comprises the steps of
a) felling an infected tree, and
b) spraying the infected tree trunk and branches simultaneously with delimbing the wood using the forestry vehicle according to any of claims 2-12 or the forestry vehicle attachment according to any of claims 1, 3-12, optionally together with removing bark from the wood;
c) optionally repeatedly moving the tree trunks, or the logs produced by bucking the tree trunks, through the head of the forestry vehicle and spraying the tree trunk or the logs in regular intervals of time, preferably in the intervals within the range of 2 to 8 weeks.

## Patentansprüche

1. Ein Anbaugerät für ein Forstfahrzeug zum Fällen und/oder Zerkleinern und/oder Bearbeiten von Baumstämmen, wobei das Anbaugerät mindestens zwei Düsen (6) und einen Kopf (4) umfasst, der an einem beweglichen Arm (3) eines Forstfahrzeugs (1) befestigt werden kann,
wobei jede Düse (6) mit Mitteln versehen ist, die die Düse (6) am Kopf (5) befestigen, und jede Düse (6) mit einem Schutzgehäuse versehen ist, wobei das Anbaugerät weiter mindestens einen Haupttank (8) zum Aufnehmen einer Flüssigkeit, eine Rohrleitung (7), die den Haupttank (8) mit den Düsen (6) verbindet, und ein Mittel (9) zum Fördern der Flüssigkeit vom Tank (8) zu den Düsen (6) und aus den Düsen (6) heraus umfasst,
wobei der Kopf (4) Mittel zum Greifen eines Baumstamms und Bewegen des Baumstamms (5) entlang seiner Längsachse aufweist,
wobei die Düsen (6) so konfiguriert sind, dass sie die gesamte Oberfläche des Baumstamms (5) mit einer durch die Düsen (6) gesprühten Flüssigkeit bedecken,
**dadurch gekennzeichnet, dass** der Kopf (4) Durchmessersensoren zur Messung des Durchmessers des Baumstamms (5) umfasst und das Anbaugerät so konfiguriert ist, dass es die Anzahl der aktiven Düsen als Reaktion auf das Signal der Durchmessersensoren anpasst.

2. Forstfahrzeug (1) zum Fällen und/oder Zerkleinern und/oder Bearbeiten von Baumstämmen, das einen an einem beweglichen Arm (3) befestigten Kopf (4) umfasst, wobei der Kopf (4) Mittel zum Greifen des Baumstamms (5) und Bewegen des Baumstamms (5) entlang seiner Längsachse aufweist, und wobei der Kopf (4) mit mindestens zwei Düsen (6) versehen ist, die an dem Kopf (4) befestigt sind, wobei die Düsen (6) so konfiguriert sind, dass sie die gesamte Oberfläche des Baumstamms (5) mit einer durch die Düsen (6) gesprühten Flüssigkeit bedecken, wobei jede Düse (6) mit einem Schutzgehäuse versehen ist, und wobei das Forstfahrzeug (1) weiter mindestens einen Haupttank (8) zum Aufnehmen einer Flüssigkeit, der vorzugsweise am Rahmen (2) des Forstfahrzeugs (1) angeordnet ist, eine Rohrleitung (7), die den Haupttank (8) mit den Düsen (6) verbindet, und ein Mittel (9) zum Fördern der Flüssigkeit vom Tank (8) zu den Düsen (6) und aus den Düsen (6) heraus umfasst, **dadurch gekennzeichnet, dass** der Kopf (4) Durchmessersensoren zur Messung des Durchmesser des Baumstamms (5) umfasst und das Forstfahrzeug (1) ist so konfiguriert, dass es die Anzahl der aktiven Düsen als Reaktion auf das Signal der Durchmessersensoren anpasst.

3. Anbaugerät nach Anspruch 1 oder Forstfahrzeug nach Anspruch 2, wobei die Anzahl der Düsen (6) zwei, vier, sechs, acht oder zehn beträgt.

4. Anbaugerät nach Anspruch 1 oder 3 oder Forstfahrzeug nach Anspruch 2 oder 3, wobei der Sprühwinkel der Düsen (6) im Bereich von 20 bis 80 Grad, vorzugsweise im Bereich von 30 bis 60 Grad liegt.

5. Anbaugerät nach einem der Ansprüche 1, 3-4 oder Forstfahrzeug nach einem der Ansprüche 2-4, wobei die Düsen (6) am Kopf (4) befestigt sind und in regelmäßigen Abständen um eine durch die Greif- und Bewegungsmittel gebildete Öffnung verteilt sind.

6. Anbaugerät nach einem der Ansprüche 1, 3-5 oder Forstfahrzeug nach einem der Ansprüche 2-5, wobei die Düsen (6) mit mindestens einem Rückschlagventil versehen sind.

7. Anbaugerät nach einem der Ansprüche 1, 3-6 oder Forstfahrzeug nach einem der Ansprüche 2-6, wobei die Düsen (6) in Vertiefungen oder Hohlräumen angeordnet sind, die an oder in einem Bauteil des Kopfes vorgesehen sind.

8. Anbaugerät nach einem der Ansprüche 1, 3-7 oder Forstfahrzeug nach einem der Ansprüche 2-7, wobei das Schutzgehäuse schließbar und öffenbar ist, wobei das Schließen und Öffnen des Schutzgehäuses vorzugsweise manuell steuerbar oder elektrisch steuerbar ist.

9. Anbaugerät nach einem der Ansprüche 1, 3-8 oder Forstfahrzeug nach einem der Ansprüche 2-8, wobei für jede Düse ein eigenes Steuerventil vorgesehen ist oder für eine Düsenhälfte ein erster Steuerventilkreis und für die andere Düsenhälfte ein zweiter Steuerventilkreis vorgesehen ist.

10. Anbaugerät nach einem der Ansprüche 1, 3-9 oder Forstfahrzeug nach einem der Ansprüche 2-9, wobei die Düsen (6) beweglich am Kopf (4) angebracht sind.

11. Anbaugerät nach einem der Ansprüche 1, 3-10 oder Forstfahrzeug nach einem der Ansprüche 2-10, wobei die Mittel (9) zum Fördern der Flüssigkeit eine mit dem Haupttank (8) verbundene Pumpe (9.12) und einen mit der Pumpe (9.12) verbundenen Arbeitstank (9.11) enthalten, wobei der Arbeitstank (9.11) mit mindestens einem Steuerventil (10) zum Steuern der durch die Düsen (6) geförderten Flüssigkeitsmenge ausgestattet ist.

12. Anbaugerät nach einem der Ansprüche 1, 3-10 oder Forstfahrzeug nach einem der Ansprüche 2-10, wobei die Mittel (9) zum Fördern der Flüssigkeit einen Arbeitstank (9.21) enthalten, der mit dem Tank (8) zum Aufnehmen der Flüssigkeit verbunden ist, vorzugsweise über ein Rückschlagventil (9.25), wobei der Arbeitstank (9.21) über ein Ventil (9.22) mit einem Lufttank (9.23) verbunden ist, der mit einem Kompressor (9.24) verbunden ist, und wobei der Arbeitstank (9.21) mit mindestens einem Steuerventil (10) zum Steuern der durch die Düsen (6) geförderten Flüssigkeitsmenge ausgestattet ist.

13. Verfahren zum Schutz von Wäldern vor Schädlingen, insbesondere vor Borkenkäfern, umfassend die Schritte
a) Fällen eines infizierten Baumes und
b) Besprühen des infizierten Baumstamms und der Baumäste gleichzeitig mit dem Entasten des Holzes unter Verwendung des Forstfahrzeugs nach einem der Ansprüche 2-12 oder des Forstfahrzeuganbaugeräts nach einem der Ansprüche 1, 3-12, optional zusammen mit dem Entfernen der Rinde vom Holz;
c) optional wiederholtes Bewegen der Baumstämme oder der durch Zerkleinern der Baumstämme erzeugten Holzstämme durch den Kopf des Forstfahrzeugs und Besprühen der Baumstämme oder der Holzstämme in regelmäßigen Zeitabständen, vorzugsweise in Abständen im Bereich von 2 bis 8 Wochen.

## Revendications

1. Accessoire pour véhicule forestier destiné à l'abattage et/ou au tronçonnage et/ou à la manipulation de troncs d'arbres, où ledit accessoire comprend au moins deux buses (6) et une tête (4) fixable à un bras mobile (3) d'un véhicule forestier (1),
où chaque buse (6) est dotée de moyens fixant la buse (6) à la tête (5), et chaque buse (6) est dotée d'un boîtier de protection, où l'accessoire comprend en outre au moins un réservoir principal (8) pour contenant un liquide, une tubulure (7) reliant le réservoir principal (8) auxdites buses (6), et un moyen (9) pour propulser le liquide du réservoir (8) vers les buses (6) et hors du buses (6),
où la tête (4) comporte des moyens pour saisir un tronc d'arbre et déplacer le tronc d'arbre (5) le long de son axe longitudinal,
où les buses (6) sont configurées pour couvrir toute la surface du tronc d'arbre (5) par un liquide pulvérisé à travers les buses (6),
**caractérisé en ce que** la tête (4) contient des capteurs de diamètre pour mesurer le diamètre du tronc d'arbre (5) et l'accessoire est configuré pour adapter le nombre de buses actives en réponse au signal provenant des capteurs de diamètre.

2. Véhicule forestier (1) pour l'abattage et/ou le tronçonnage et/ou la manipulation de troncs d'arbres, qui comprend une tête (4) fixée à un bras mobile (3), ladite tête (4) comportant des moyens pour saisir le tronc d'arbre (5) et déplacer le tronc d'arbre (5) le long de son axe longitudinal, et ladite tête (4) étant munie d'au moins deux buses (6) fixées à la tête (4), où les buses (6) sont configurées pour couvrir toute la surface du tronc d'arbre (5) par un liquide pulvérisé à travers les buses (6), où chaque buse (6) est dotée d'un boîtier de protection, et où le véhicule forestier (1) comprend en outre au moins un réservoir principal (8) destiné à contenir un liquide, disposé de préférence sur le châssis (2) du véhicule forestier (1), une tubulure (7) reliant le réservoir principal (8) auxdites buses (6), et un moyen (9) de propulsion le liquide depuis le réservoir (8) vers les buses (6) et hors des buses (6), **caractérisé en ce que** la tête (4) contient des capteurs de diamètre pour mesurer le diamètre du tronc d'arbre (5) et **en ce que** le véhicule forestier (1) est configuré pour adapter le nombre de buses actives en réponse au signal des capteurs de diamètre.

3. Accessoire selon la revendication 1, ou véhicule forestier selon la revendication 2, où le nombre de buses (6) est de deux, quatre, six, huit ou dix.

4. Accessoire selon la revendication 1 ou 3, ou véhicule forestier selon la revendication 2 ou 3, où l'angle de pulvérisation des buses (6) est compris entre 20 et 80 degrés, de préférence entre 30 et 60 degrés.

5. Accessoire selon l'une quelconque des revendications 1, 3 à 4, ou véhicule forestier selon l'une quelconque des revendications 2-4, où les buses (6) sont fixées à la tête (4) et réparties à intervalles réguliers autour d'une ouverture formé par les moyens pour saisir et déplacer le tronc d'arbre.

6. Accessoire selon l'une quelconque des revendications 1, 3 à 5, ou véhicule forestier selon l'une quelconque des revendications 2 à 5, où les buses (6) sont munies d'au moins un clapet anti-retour.

7. Accessoire selon l'une quelconque des revendications 1, 3 à 6, ou véhicule forestier selon l'une quelconque des revendications 2 à 6, où les buses (6) sont disposées dans des évidements ou des cavités prévus sur ou à l'intérieur d'un composant de la tête.

8. Accessoire selon l'une quelconque des revendications 1, 3 à 7, ou véhicule forestier selon l'une quelconque des revendications 2 à 7, où le boîtier de protection peut être fermé et ouvert, de préférence la fermeture et l'ouverture du boîtier de protection sont commandables manuellement ou contrôlable électriquement.

9. Accessoire selon l'une quelconque des revendications 1, 3 à 8, ou véhicule forestier selon l'une quelconque des revendications 2 à 8, où une soupape de commande est prévue séparément pour chaque buse, ou un premier circuit de soupapes de commande est prévu pour une moitié des buses et un deuxième circuit de soupapes de commande est prévu pour l'autre moitié des buses.

10. Accessoire selon l'une quelconque des revendications 1, 3 à 9, ou véhicule forestier selon l'une quelconque des revendications 2 à 9, où les buses (6) sont montées mobiles sur la tête (4).

11. Accessoire selon l'une quelconque des revendications 1, 3 à 10, ou véhicule forestier selon l'une quelconque des revendications 2 à 10, où les moyens (9) pour propulser le liquide contiennent une pompe (9.12) reliée au réservoir principal (8) et un réservoir de travail (9.11) relié à la pompe (9.12), ledit réservoir de travail (9.11) étant équipé d'au moins une soupape de commande (10) pour contrôler la quantité de liquide propulsée à travers les buses (6).

12. Accessoire selon l'une quelconque des revendications 1, 3 à 10, ou véhicule forestier selon l'une quelconque des revendications 2 à 10, où les moyens (9) pour propulser le liquide contiennent un réservoir de travail (9.21) relié au réservoir (8) pour retenir le liquide, de préférence via un clapet anti-retour (9.25), ledit réservoir de travail (9.21) étant relié via une soupape (9.22) à un réservoir d'air (9.23) relié à un compresseur (9.24), et ledit réservoir de travail (9.21) étant équipé d'au moins une soupape de régulation (10) pour contrôler la quantité de liquide propulsée à travers les buses (6).

13. Procédé de protection des forêts contre les nuisibles, notamment contre les scolytes, qui comprend les étapes consistant à :
a) abattre un arbre infecté, et
b) pulvériser le tronc et les branches de l'arbre infectés simultanément à l'ébranchage du bois à l'aide du véhicule forestier selon l'une quelconque des revendications 2 à 12 ou de l'accessoire pour véhicule forestier selon l'une quelconque des revendications 1, 3 à 12, éventuellement conjointement à l'enlèvement de l'écorce du bois ;
c) éventuellement déplacer de manière répétée les troncs d'arbres, ou les grumes produites par tronçonnage des troncs d'arbres, à travers la tête du véhicule forestier et pulvériser le tronc d'arbre ou les grumes à intervalles de temps réguliers, de préférence à des intervalles compris dans la plage de 2 à 8 semaines.
